# EUROPÄISCHE PATENTSCHRIFT

(11) **EP 2 125 611 B1**
(45) Veröffentlichungstag und Bekanntmachung des Hinweises auf die Patenterteilung: **02.11.2016**
(21) Anmeldenummer: 08701382.7
(22) Anmeldetag: 10.01.2008
(51) Int. Cl.: C01B 17/16, B01J 8/00, B01J 8/06, B01J 10/00, B01J 19/00, B01J 19/24

(54) **REAKTOR UND VERFAHREN ZUR HERSTELLUNG VON SCHWEFELWASSERSTOFF**
REACTOR AND METHOD FOR PRODUCTION OF HYDROGEN SULPHIDE
RÉACTEUR ET PROCÉDÉ DE PRÉPARATION DE SULFURE D'HYDROGÈNE

(30) Priorität: 16.01.2007 EP 07100588
(43) Veröffentlichungstag der Anmeldung: 02.12.2009
(73) Patentinhaber: BASF SE, 67056 Ludwigshafen am Rhein (DE)
(72) Erfinder: WÖLFERT, Andreas, 74906 Bad Rappenau (DE); JACHOW, Harald, 64625 Bensheim (DE); DRIESS, Heinz, 67071 Ludwigshafen (DE)
(86) Internationale Anmeldenummer: PCT/EP2008/050231
(87) Internationale Veröffentlichungsnummer: WO 2008/087086

(56) Entgegenhaltungen:
- EP-A- 0 441 058
- WO-A-99/46037
- WO-A-99/50235
- WO-A-2007/045574
- DE-C- 558 432
- GB-A- 2 307 191
- US-A- 2 863 725
- US-A- 2 876 070
- US-A- 4 233 269

## Beschreibung

Die vorliegende Erfindung bezieht sich auf einen Reaktor und ein Verfahren zur kontinuierlichen Herstellung von H₂S aus Wasserstoff und Schwefel.

Die Herstellung von Schwefelwasserstoff erfolgt im Stand der Technik z.B. durch das H₂S-Verfahren nach Girdler (Ullmann's Encyclopedia of Industrial Chemistry, Sixth Edition, 2003, Vol. 17, Seite 291). H₂S wird dabei unkatalytisch aus den Elementen Schwefel und Wasserstoff in einer Kolonne mit Einbauten und einem im Wesentlichen horizontal ausgerichteten, erweiterten Sumpf hergestellt. In den mit siedendem Schwefel gefüllten Sumpf wird Wasserstoff eingeleitet, welcher Schwefel in die aufsteigende Gasphase strippt. Wasserstoff und aufsteigender Schwefel reagieren im Gasraum der Kolonne, wobei die dabei freiwerdende Reaktionswärme dem Produktgas durch Wäsche mit flüssigem Schwefel entzogen wird. Dazu wird aus dem Sumpf der Kolonne flüssiger Schwefel abgezogen, mit frischem, kaltem Schwefel gemischt und am Kopf der Kolonne aufgegeben. Das Produktgas, das weitgehend Schwefelwasserstoff enthält, wird in zwei Wärmetauschern abgekühlt. Als nachteilig erweist sich, dass das Verfahren unter Druck und bei erhöhter Temperatur durchgeführt werden muss. Die erhöhte Temperatur führt zu verstärkten Korrosionsraten und Materialabtrag an den Reaktorwänden. Im Falle einer Leckage treten aufgrund des erhöhten Drucks größere Mengen an giftigem H₂S aus.

Eine katalytische Herstellung von H₂S wird in Angew. Chem.; 74 Jahrgang 1962; Nr. 4; Seite 151 beschrieben. Dabei wird Wasserstoff durch ein von außen temperiertes Schwefelbad geleitet. Der mit Schwefeldampf beladene Wasserstoff tritt durch Bohrungen in einen Katalysatorraum ein. Nicht abreagierter Schwefel wird nach Verlassen des Katalysatorraums in einem oberen Teil des H₂S-Auslassrohres kondensiert und gelangt über ein Rücklaufrohr in das Schwefelbad zurück. Der Katalysatorraum ist konzentrisch um das H₂S-Auslassrohr angeordnet. Nachteilig bei dem Verfahren in technischem Maßstab ist, dass die Reaktionswärme nicht zur Erwärmung des Schwefelbads genutzt wird, sondern die Erwärmung über den Mantel des Schwefelbads erfolgt.

In US 2,863,725 wird ein Verfahren zur Herstellung von H₂S an einem Molybdän enthaltenden Katalysator beschrieben, wobei gasförmiger Wasserstoff in einen eine Schwefelschmelze enthaltenden Reaktor eingeleitet wird und durch die Schwefelschmelze in Form von Gasblasen aufsteigt. Die Menge an eingeleitetem Wasserstoff und die Temperatur der Schwefelschmelze, angegeben wird eine Temperatur unter 326°C, werden derart eingestellt, dass ein sich oberhalb der Schwefelschmelze in einer Gaszone ausbildendes Gasgemisch die Edukte Wasserstoff und Schwefel mit einem Überschuss an Wasserstoff über dem stöchiometrischen Reaktionsverhältnis enthält. Zur Nutzung der Reaktionswärme der exothermen Reaktion von Wasserstoff und Schwefel zu Schwefelwasserstoff wird die Reaktion in Reaktionsrohren durchgeführt, die in der Schwefelschmelze positioniert sind. Die freiwerdende Reaktionswärme wird zur Verdampfung des Schwefels der Schwefelschmelze genutzt. Die Einleitung des Wasserstoffs erfolgt über ein perforiertes Rohr in einen unteren Bereich der Schwefelschmelze.

In US 5,173,285 wird ein weiteres Verfahren zur Herstellung von H₂S beschrieben, wobei eingeleiteter Wasserstoff genutzt wird, um Schwefel aus der Schwefelschmelze in die Gasphase zu strippen. Das Verfahren umfasst eine zweistufige Herstellung, wobei in einer ersten Stufe der eingeleitete Wasserstoff mit dem Schwefel in der Schwefelschmelze ohne Katalysator zu H₂S reagiert und in einer zweiten Stufe zusätzlich in die Gasphase eingeleiteter Wasserstoff an einem Katalysator die Umsetzung vervollständigt. Als nachteilig erweist sich der im Produkt verbleibende Rest an Wasserstoff. Das Einleiten von gasförmigem Wasserstoff erfolgt über einen in der Schwefelschmelze angeordneten Verteiler, der aus einem einfachen oder verzweigten, in der Schwefelschmelze weitgehend horizontal angeordnetem Rohrsystem mit Durchtrittsöffnungen für den Wasserstoff besteht. Beim Anfahren des Reaktors zur Herstellung von H₂S kann flüssiger Schwefel in die Durchtrittsöffnungen eindringen und sich bei entsprechend tiefen Temperaturen dort verfestigen, wodurch die Durchtrittsöffnungen verstopfen.

Aus der US 2,876,070 ist ein Verfahren zur unkatalytischen Herstellung von H₂S in einem im Wesentlichen horizontalen, in zwei übereinander liegende Segmente unterteilten Behälter bekannt. Die Reaktion von Wasserstoff und Schwefel findet weitgehend in den Gasräumen der zwei Segmente statt. Der erste Gasraum des unteren, ersten Segments wird durch eine nach unten offene und mit einem sich nach unten erstreckenden Rand versehene Glocke begrenzt. Der Wasserstoff wird unterhalb der Glocke in das teilweise mit flüssigem Schwefel gefüllte erste Segment über ein perforiertes Rohr eingespeist, der Wasserstoff steigt in Form von Gasblasen in diesem Teil der Schwefelschmelze nach oben und sammelt sich unterhalb des horizontalen Bodens der Glocke in dem ersten Gasraum. Der mit Schwefel beladene Wasserstoff reagiert in dem ersten Gasraum unter der Glocke unkatalytisch zu H₂S. Dann strömt das Gasgemisch nach unten über den zackenförmigen Rand der Glocke in ein zweites Segment beziehungsweise in eine in diesem zweiten Segment enthaltende Schwefelschmelze. Das Gasgemisch, welches Produkt und nicht umgesetzte Edukte enthält, sättigt sich erneut mit gasförmigem Schwefel und setzt sich in dem dazugehörenden zweiten Gasraum zu H₂S weiter um. Dieses im Grunde zweistufige Verfahren macht einen gewissen apparativen Aufwand erforderlich. Als nachteilig erweist sich auch, dass der gasförmige Wasserstoff über ein mit Durchtrittsöffnungen versehenes Rohr in die Schwefelschmelze des ersten Segments, begrenzt durch die Glocke, eingespeist wird, wodurch Verstopfungen der Durchtrittsöffnungen des Rohrs durch eindringenden Schwefel, insbesondere während der Anfahr- und Abfahrphase, nicht vermieden werden können. Die Neuverteilung des Gasgemisches aus dem ersten Segment über den zackenförmigen Rand der Glocke in die Schwefelschmelze des zweiten Segments führt zu einer Begasung nur der unmittelbar oberhalb des Randes gelegenen Schwefelschmelze und ist somit ungleichmäßig. Insbesondere bei großen Abmessungen des Reaktors kann diese Form der Begasung unzureichend und wenig effektiv sein. Als nachteilig erweist sich auch das mehrstufige Verfahren, welches geprägt ist durch eine Neuverteilung des Wasserstoffs in den einzelnen Stufen.

Bei Verwendung eines einfachen Einleitrohrs als Zuführeinrichtung ergibt sich hingegen die Schwierigkeit, dass der Wasserstoff ungleichmäßig in der Schwefelschmelze verteilt wird. Ausgehend von der Einleitstelle bilden sich dabei große Wasserstoffblasen, die beim Aufsteigen in der Schwefelschmelze wenig Schwefel in die Gasphase strippen. Um diesen Effekt zu kompensieren, kann der Weg des Wasserstoffs durch die Schwefelschmelze und damit die Verweilzeit zum Beladen des Wasserstoffs mit Schwefel verlängert werden. Nachteilig ist dabei das große Volumen, das der Reaktor dafür benötigt.

Aufgabe der vorliegenden Erfindung ist es demnach, einen Reaktor und ein Verfahren bereitzustellen, die die Nachteile des Standes der Technik vermeiden und die insbesondere ein effizientes Inkontaktbringen von eingeleitetem gasförmigem Wasserstoff mit einer Schwefelschmelze ermöglichen und damit zu einer effizienten, sicheren und ökonomischen Herstellung von H₂S führen.

Die Lösung der Aufgabe geht aus von einem Reaktor zur kontinuierlichen Herstellung von H₂S aus Wasserstoff und Schwefel, der eine Zuführvorrichtung für gasförmigen Wasserstoff und eine Verteilereinrichtung zum Verteilen von gasförmigem Wasserstoff in eine zumindest in einem unteren Teil des Reaktors enthaltene Schwefelschmelze umfasst. Gasförmiger Wasserstoff wird über die Zuführeinrichtung in die Schwefelschmelze in den Reaktor eingeleitet und über die Verteilereinrichtung in der Schwefelschmelze verteilt. Die Zuführeinrichtung umfasst ein in dem Reaktor senkrecht angeordnetes, an beiden Enden offenes Rohr, welches unterhalb der Verteilereinrichtung angeordnet ist.

Die Verteilereinrichtung ist in der Schwefelschmelze angeordnet und umfasst eine im Reaktor (vorzugsweise horizontal) angeordnete Verteilerplatte mit einem sich nach unten erstreckenden Rand. Der Wasserstoff wird mittels dieser Verteilereinrichtung aus einer unterhalb der Verteilerplatte ausbildenden Wasserstoffblase in der Schwefelschmelze verteilt. Das Verteilen kann ausschließlich oder zusätzlich über den Rand der Verteilereinrichtung erfolgen. Dabei dispergiert der unter der Verteilerplatte aufgestaute Wasserstoff über den Randbereich des sich nach unten erstreckenden Randes in die Schwefelschmelze, indem der Wasserstoff aus der Wasserstoffblase durch einen Spalt zwischen Verteilereinrichtung und Reaktormantel in der Schwefelschmelze verteilt wird. Gemäß einer bevorzugten Ausführungsform der vorliegenden Erfindung weist die Verteilerplatte der Verteilereinrichtung Durchgangsöffnungen auf. Der Wasserstoff kann dann mittels dieser Verteilereinrichtung aus einer sich unterhalb der Verteilerplatte ausbildenden Wasserstoffblase ausschließlich oder zusätzlich durch die Durchgangsöffnungen in der Schwefelschmelze über der Verteilerplatte verteilt werden.

Die kontinuierliche Herstellung von H₂S findet vorzugsweise in einem senkrecht stehenden Reaktor statt, der einen zylindrischen oder prismenförmigen zentralen Körper umfasst, umgeben von einem Reaktormantel, der an beiden Enden durch je eine Haube geschlossen ist. Die Hauben können jede geeignete Form aufweisen, beispielsweise halbkugelförmig oder konisch ausgebildet sein.

Der Reaktor ist in einem unteren Teil mit einer Schwefelschmelze gefüllt. In die Schwefelschmelze kann über eine Zuführeinrichtung gasförmiger Wasserstoff eingeleitet werden, wobei sich oberhalb der Schwefelschmelze ein Eduktgemisch enthaltend im Wesentlichen gasförmigen Schwefel und gasförmigen Wasserstoff in einem Eduktbereich sammelt, der mit der Schwefelschmelze über eine Phasengrenze in Kontakt steht und der nach oben beispielsweise durch eine Unterteilung wie einen Boden begrenzt wird.

Dem Reaktor wird jeweils über eine geeignete Zuführeinrichtung unterhalb der Verteilereinrichtung gasförmiger Wasserstoff und flüssiger Schwefel zugeführt. An geeigneter Stelle wird das Produkt Schwefelwasserstoff, beispielsweise an einer oberen Haube, aus dem Produktbereich des Reaktors geleitet.

Die Zuführeinrichtung umfasst ein in dem Reaktor senkrecht angeordnetes, an beiden Enden offenes Rohr, welches unterhalb der Verteilereinrichtung angeordnet ist und dessen oberes Ende vorzugsweise in den Raum, der von der Verteilerplatte und dem sich nach unten erstreckenden Rand begrenzt wird, hineinragt und besonders bevorzugt in die Wasserstoffblase hineinragt. Durch ein Hineinragen in den Raum unter der Verteilerplatte und insbesondere in die darunter ausgebildete Wasserstoffblase wird in vorteilhafter Weise ein ungleichmäßiger Wasserstoffeintrag in die Schwefelschmelze vermieden.

In das senkrechte Rohr der Zuführeinrichtung mündet vorzugsweise seitlich ein schräg nach unten verlaufendes Einleitrohr, durch welches der Wasserstoff von außerhalb des Reaktors eingeleitet wird. Die Zuführeinrichtung ist so gestaltet, dass in das senkrecht angeordnete Rohr eintretender Schwefel frei nach unten abfließen kann, ohne die Zuführeinrichtung für den Wasserstoff zu verstopfen. Der Wasserstoff steigt in dem senkrecht angeordneten Rohr nach oben und sammelt sich unterhalb der Verteilereinrichtung.

Die Verteilereinrichtung des erfindungsgemäßen Reaktors umfasst eine in dem Reaktor möglichst horizontal angeordnete Verteilerplatte (vorzugsweise mit Durchgangsöffnungen) und einen sich nach unten erstreckenden Rand. Die vorzugsweise ebene Verteilerplatte erstreckt sich vorzugsweise nahezu über die gesamte Querschnittsfläche des Reaktors, wobei zwischen Reaktormantel und Verteilereinrichtung ein Spalt verbleibt. Der Spalt zwischen dem Rand der Verteilereinrichtung und dem Reaktormantel hat vorzugsweise eine Breite zwischen 1 und 50 mm, insbesondere zwischen 2 und 25 mm, besonders bevorzugt zwischen 5 und 10 mm. Die Form der Verteilerplatte richtet sich nach der Geometrie des Reaktors, in welchem sie angeordnet wird. Sie kann beispielsweise kreisförmig oder mehreckig sein oder jede andere beliebige Form aufweisen. Vorzugsweise können am Außenumfang der Verteilerplatte Aussparungen vorgesehen sein, welche Durchführungsöffnungen z.B. für eine Wasserstoffeinleitung, eine Schwefeleinleitung und eine Schwefelrückführung bereitstellen. Somit kann der Spalt zwischen Verteilereinrichtung und Reaktormantel eine geringe Breite aufweisen, so dass ein starkes Schwingen der Verteilereinrichtung in dem Reaktor vermieden wird.

Der aufgestaute Wasserstoff kann über den Randbereich des sich nach unten erstreckenden Randes der Verteilerplatte in die Schwefelschmelze dispergieren, wobei der Wasserstoff aus der Wasserstoffblase dann durch einen Spalt zwischen Verteilereinrichtung und Reaktormantel in der Schwefelschmelze verteilt wird. Gemäß einer bevorzugten Ausführungsform der vorliegenden Erfindung weist der sich nach unten erstreckende Rand der Verteilereinrichtung einen zackenförmigen Randbereich auf, über den Wasserstoff aus der Wasserstoffblase durch einen Spalt zwischen dem Rand und einem Reaktormantel des Reaktors in die Schwefelschmelze geleitet wird. Dadurch kann der unter der Verteilerplatte aufgestaute Wasserstoff in feine Gasblasen verteilt durch den Spalt in der Schwefelschmelze dispergiert werden.

Der unterhalb der Verteilereinrichtung eingeleitete Wasserstoff staut sich unterhalb dieser Verteilerplatte zu einer Wasserstoffblase in dem Raum auf, der durch den sich nach unten erstreckenden Rand und die Verteilerplatte begrenzt wird. Als Wasserstoffblase wird dabei eine weitgehend zusammenhängende Ansammlung von Wasserstoff bezeichnet, die sich dadurch bildet, dass in den Reaktor unterhalb der Verteilereinrichtung zumindest beim Anfahren des Reaktors mehr Wasserstoff zugeführt wird, als (z.B. über den Rand) in die Schwefelschmelze dispergiert, und dass während der kontinuierlichen Herstellung des Schwefelwasserstoffs kontinuierlich Wasserstoff zum Aufrechterhalten der Wasserstoffblase zugeführt wird.

Vorzugsweise wird die Verteilerplatte in dem Reaktor horizontal angeordnet, so dass die sich unterhalb der Verteilerplatte aufstauende Wasserstoffblase nahezu konstante Höhe aufweist.

Vorzugsweise weist die Verteilerplatte Durchgangsöffnungen auf, durch die der unterhalb der Verteilerplatte aufgestaute Wasserstoff in die über der Verteilerplatte befindliche Schwefelschmelze dispergiert, wodurch vorteilhaft Schwingungen innerhalb des Reaktors durch eine gleichmäßige Verteilung des Wasserstoffs über den Reaktorquerschnitt vermieden werden. Durch die Durchgangsöffnungen in der Verteilerplatte dispergiert der aufgestaute Wasserstoff gleichmäßig verteilt aus der Wasserstoffblase in die über der Verteilerplatte befindliche Schwefelschmelze. Die Anzahl der Durchgangsöffnungen in der Verteilerplatte richtet sich unter anderem nach dem Volumenstrom des eingeleiteten Wasserstoffs und beträgt vorzugsweise 2 bis 100, insbesondere 4 bis 50, besonders bevorzugt 8 bis 20 pro 100 Norm-m³/h. Die Durchgangsöffnungen können z.B. kreisförmig oder als Schlitze ausgebildet sein, wobei bevorzugte Durchmesser bzw. Schlitzbreiten bei 2 bis 30 mm, bevorzugt 5 bis 20 mm, besonders bevorzugt 7 bis 15 mm liegen. Die Durchgangsöffnungen sind in der Verteilerplatte vorzugsweise regelmäßig angeordnet. Der Flächenanteil aller Durchgangsöffnungen, bezogen auf die Fläche der Verteilerplatte, liegt vorzugsweise zwischen 0,001 und 5 %, bevorzugt zwischen 0,02 und 1 %, besonders bevorzugt zwischen 0,08 und 0,5 %.

Um eine gute Durchmischung der Schwefelschmelze durch den aufsteigenden Wasserstoff zu erreichen und somit ein möglichst effizientes Strippen des Schwefels in den aufsteigenden Wasserstoff zu gewährleisten, liegt die Gasgeschwindigkeit des durch die Durchgangsöffnungen dispergierten Wasserstoffs vorzugsweise bei 20 bis 400 m/s, insbesondere 50 bis 350 m/s, bevorzugt 90 bis 300 m/s, besonders bevorzugt 150 bis 250 m/s.

Der erfindungsgemäße Reaktor ist in einem unteren Teil mit einer Schwefelschmelze gefüllt. In die Schwefelschmelze wird über eine Zuführeinrichtung gasförmiger Wasserstoff eingeleitet, wobei sich oberhalb der Schwefelschmelze ein Eduktgemisch enthaltend im Wesentlichen gasförmigen Schwefel und gasförmigen Wasserstoff in einem Eduktbereich sammelt, der mit der Schwefelschmelze über eine Phasengrenze in Kontakt steht. Der Eduktbereich wird nach oben beispielsweise durch eine Unterteilung des Reaktors wie durch einen Boden begrenzt. In einer bevorzugten Ausführungsform der vorliegenden Erfindung ist der Boden in einem oberen Teil des Reaktors mit dem Reaktormantel verbunden, bevorzugt im oberen Drittel, besonders bevorzugt im oberen Viertel des Reaktorinnenraums.

Gemäß einer Ausführungsform der vorliegenden Erfindung umfasst der Reaktor mindestens ein Kontaktrohr, in welchem die Umsetzung von gasförmigem Schwefel und Wasserstoff zu H₂S stattfindet. Dabei steht das mindestens eine Kontaktrohr teilweise in Kontakt mit der Schwefelschmelze.

Gemäß einer bevorzugten Ausführungsform des erfindungsgemäßen Reaktors ist in dem Reaktor mindestens ein U-förmiges Rohr vorgesehen, das zumindest teilweise in Kontakt mit der Schwefelschmelze steht. Der Reaktor ist daher als eine Art Rohrbündelreaktor ausgebildet, mit Kontaktrohren, die U-förmig gestaltet sind. Ein solches U-förmiges Rohr weist zwei Schenkel auf, die an ihren unteren Enden durch einen bogenförmigen Bereich miteinander verbunden sind. Die U-förmigen Rohre können jeweils unterschiedlich lange oder vorzugsweise gleich lange Schenkel aufweisen. Die U-förmigen Rohre können z.B. einen Schenkeldurchmesser zwischen 2 und 20 cm, insbesondere zwischen 2,5 und 15 cm, besonders bevorzugt zwischen 5 und 8 cm aufweisen. Das mindestens eine U-förmige Rohr ist vorzugsweise senkrecht in dem Reaktor angeordnet, wobei sich der bogenförmige Bereich unten und die beiden Enden der Schenkel oben befinden. Die Bereitstellung eines Reaktionsbereichs in U-förmigen Kontaktrohren erlaubt eine bzgl. der Reaktorlänge kompakte Bauweise des Reaktors, da der zur Umsetzung von Wasserstoff mit Schwefel zu H₂S vorgesehene Reaktionsbereich auf beide Schenkel je eines U-förmigen Rohrs aufgeteilt werden kann.

In dem Zusammenhang mit der vorliegenden Erfindung bedeutet "in Kontakt stehen", dass ein Wärmeaustausch zwischen der Schwefelschmelze und dem Innenraum des Kontaktrohrs über die Wandung des Kontaktrohrs stattfinden kann. Das mindestens eine U-förmige Rohr taucht vorzugsweise teilweise in die Schwefelschmelze ein.

Beim einfachen Einleiten von Wasserstoff z.B. über ein senkrechtes Einleitrohr ohne eine erfindungsgemäße Verteilereinrichtung in eine Schwefelschmelze kann sich eine inhomogene Wasserstoffverteilung ergeben. In der Nähe des Einleitrohres steigen in der Schwefelschmelze große Blasen von Wasserstoff auf. In anderen Regionen der Schwefelschmelze liegt dann kaum Wasserstoff vor. Dadurch können Schwingungen der (vorzugsweise U-förmigen) Kontaktrohre angeregt werden. Die in dem erfindungsgemäßen Reaktor enthaltene, wie eine nach unten offene Glocke gestaltete Verteilereinrichtung dient daher auch zur Stabilisierung der Kontaktrohre eines Rohrbündels in dem erfindungsgemäßen Reaktor.

Innerhalb des mindestens einen (vorzugsweise U-förmigen) Kontaktrohrs ist vorzugsweise ein Katalysator zur Umsetzung von Wasserstoff und Schwefel zu H₂S angeordnet, wodurch ein Reaktionsbereich bereitgestellt wird. Als Reaktionsbereich wird im Zusammenhang mit der vorliegenden Erfindung derjenige Bereich innerhalb der U-förmigen Rohre bezeichnet, in dem sich der Katalysator befindet. Die Umsetzung der Edukte erfolgt hauptsächlich in dem Reaktionsbereich, der den Katalysator enthält. Durch Einsatz des Katalysators kann die Umsetzung zu H₂S bei moderaten Temperaturen und bei niedrigem Druck durchgeführt werden. Der Katalysator ist vorzugsweise in Form eines geschütteten Festbettes in dem mindestens einen U-förmigen Rohr angeordnet. Geeignete Katalysatoren sind beispielsweise Kobalt und Molybdän enthaltende Katalysatoren auf einem Träger, die als Formkörper beliebiger Gestalt eingesetzt werden. Beispielsweise beträgt der Durchmesser der Formkörper 2 bis 12 mm, insbesondere zwischen 3 und 10 mm, besonders bevorzugt zwischen 4 und 8 mm und die Länge liegt vorzugsweise zwischen 2 und 12 mm, insbesondere zwischen 3 und 10 mm, besonders bevorzugt zwischen 4 und 8 mm.

Bei der Herstellung von Schwefelwasserstoff in einem Reaktor mit U-förmigen Rohren tritt das Eduktgemisch aus dem Eduktbereich in einen Schenkel des mindestens einen U-förmigen Rohrs durch mindestens eine Eintrittsöffnung ein. Die Eintrittsöffnung ist vorzugsweise in einem Schenkel des mindestens einen U-förmigen Rohres oberhalb der Schwefelschmelze angeordnet. Die Eintrittsöffnung mündet aus dem Eduktbereich in den einen Schenkel des U-förmigen Rohrs. Der Abstand zwischen der Phasengrenze der Schwefelschmelze und der Eintrittsöffnung des U-förmigen Rohrs wird bevorzugt so gewählt, dass möglichst wenig flüssiger Schwefel in Form von Tröpfchen mit dem Strom des Eduktgemischs in den Innenraum der U-förmigen Rohre mitgerissen wird. Der Abstand zwischen Eintrittsöffnung und Phasengrenze der Schwefelschmelze liegt vorzugsweise zwischen 0,3 und 3 m, insbesondere zwischen 0,6 und 2,5 m, besonders bevorzugt zwischen 0,9 und 2 m.

Bei der Herstellung von Schwefelwasserstoff in dem Reaktor mit U-förmigen Rohren durchströmt das Eduktgemisch das U-förmige Rohr entlang eines Strömungsweges, d.h. es durchströmt zunächst nach dem Eintritt durch die Eintrittsöffnung einen Schenkel des U-förmigen Rohres von oben nach unten, tritt durch den bogenförmigen Bereich des U-förmigen Rohrs in den zweiten Schenkel ein und durchströmt anschließend den zweiten Schenkel von unten nach oben. Das Eduktgemisch wird hauptsächlich in dem Reaktionsbereich, der innerhalb des U-förmigen Rohres enthalten ist, an dem dort vorzugsweise angeordneten Katalysator umgesetzt. Durch eine Austrittsöffnung in dem zweiten Schenkel des U-förmigen Rohrs tritt das das Produkt enthaltende Gas gemäß einer bevorzugten Ausführungsform der Erfindung in einen (vorzugsweise oberhalb der Schwefelschmelze und oberhalb des Eduktbereiches in dem Reaktor angeordneten) Produktbereich ein, der von dem Eduktbereich (z.B. durch einen Boden) getrennt ist.

Dem Reaktor wird über eine geeignete Zuführeinrichtung gasförmiger Wasserstoff und flüssiger Schwefel zugeführt. An geeigneter Stelle wird das Produkt Schwefelwasserstoff, beispielsweise an einer oberen Haube, aus dem Produktbereich des Reaktors geleitet.

Gemäß einer bevorzugten Variante der vorliegenden Erfindung ist das mindestens eine Kontaktrohr mit einem Boden in dem erfindungsgemäßen Reaktor verbunden. Im Falle von U-förmigen Kontaktrohren sind die beiden Schenkel eines U-förmigen Rohres vorzugsweise jeweils an ihrem oberen Ende mit einem Boden des Reaktors verbunden, der wiederum in einem oberen Teil des Reaktors an dem Reaktormantel in geeigneter Weise befestigt ist. Der Boden unterteilt den Reaktor vorzugsweise in zwei Teilbereiche, insbesondere legt er einen darüber liegenden Produktbereich fest. Die bevorzugte Befestigung des mindestens einen (vorzugsweise U-förmigen) Kontaktrohrs an einem mit dem Reaktormantel verbundenen Boden erlaubt thermische Längenänderungen des Reaktors und der Kontaktrohre unabhängig voneinander, da das Rohrbündel nur über den Boden am Mantel des Reaktors befestigt ist, so dass bei der Konstruktion des Reaktors auf Kompensatoren verzichtet werden kann. Durch die Verbindung der Kontaktrohre mit dem Boden an ihren oberen Enden wird vorteilhafterweise erreicht, dass sich die Kontaktrohre entsprechend der Schwerkraft stabilisieren.

Gemäß einer bevorzugten Ausführungsform der vorliegenden Erfindung ist in einem oberen Abschnitt des Reaktors, vorzugsweise nahe der oberen Haube, ein Boden angeordnet, der den Reaktorinnenraum in einen darunter liegenden unteren Teilbereich und einen darüber liegenden oberen Teilbereich einteilt.

Der obere Teilbereich enthält vorzugsweise den Produktbereich, der während des Betriebs des Reaktors hauptsächlich das Produkt Schwefelwasserstoff enthält. Mit dem Produktbereich steht beispielsweise jeweils ein Schenkel der U-förmigen Rohre in offener Verbindung.

Der untere Teilbereich des Reaktors enthält vorzugsweise den Eduktbereich direkt unterhalb des Bodens und darunter eine Schwefelschmelze, in die flüssiger Schwefel aus einer externen Quelle und/oder als Rücklauf eingespeist wird. Die (bevorzugt U-förmig ausgebildeten) Kontaktrohre stehen vorzugsweise teilweise in thermischem Kontakt mit der Schwefelschmelze, vorzugsweise sind sie teilweise direkt in der Schwefelschmelze angeordnet, tauchen also in die Schwefelschmelze ein. Somit findet eine Übertragung der bei der exothermen Reaktion zu H₂S freiwerdenden Wärmeenergie über das mindestens eine (vorzugsweise U-förmige) Kontaktrohr in die umgebende Schwefelschmelze statt. Die Reaktionswärme wird für eine Verdampfung des darin enthaltenen Schwefels genutzt. Diese Wärmekopplung ermöglicht ein energetisch günstiges Verfahren, bei dem externe Wärmezufuhr erheblich reduziert oder nicht notwendig ist. Gleichzeitig kann eine Überhitzung des Katalysators vermieden werden, wodurch sich die Standzeiten des Katalysators erhöhen.

Für eine gute Übertragung der Wärmeenergie wird vorzugsweise der Wärmewiderstand einer Katalysatorschüttung im Reaktionsbereich möglichst gering gehalten. Vorzugsweise wird für die Umsetzung der Edukte zu H₂S eine Vielzahl von Katalysator enthaltenden (vorzugsweise U-förmigen) Kontaktrohren bereitgestellt, so dass der jeweilige Weg vom Kern der Katalysatorschüttung zur Wand des Kontaktrohrs gering ist. Vorzugsweise liegt ein Verhältnis der Summe der Querschnittsflächen aller Kontaktrohre (bzw. aller Schenkel der U-förmigen Kontaktrohre) bezogen auf die Querschnittsfläche des (vorzugsweise zylindrischen) Reaktorkörpers zwischen 0,05 und 0,9, insbesondere zwischen 0,15 und 0,7, besonders bevorzugt zwischen 0,2 und 0,5, ganz besonders bevorzugt zwischen 0,25 und 0,4.

Damit ein ausreichender thermischer Kontakt für die Wärmeübertragung von dem (vorzugsweise U-förmigen) Kontaktrohr in die umgebende Schwefelschmelze besteht, wird angestrebt, dass 20 bis 100 % der äußeren Mantelfläche eines jeweiligen (vorzugsweise U-förmigen) Kontaktrohrs entlang des den Katalysator enthaltenden Reaktionsbereichs in Kontakt mit der Schwefelschmelze steht. Damit die Wärmeübertragung in die Schwefelschmelze gut funktioniert, sollte dort, wo die Reaktion im Kontaktrohr stattfindet, die äußere Mantelfläche des Kontaktrohrs entlang des den Katalysator enthaltenden Reaktionsbereichs zu mehr als 20 %, bevorzugt zu mehr als 50%, besonders bevorzugt zu mehr als 80% von der Schwefelschmelze umgeben sein. Bei einem zu geringen Füllstand der Schwefelschmelze in dem Reaktor und damit einem zu geringen Kontakt von Kontaktrohr und Schwefelschmelze besteht die Gefahr, dass die Reaktionswärme nicht ausreichend abgeführt wird.

In Strömungsrichtung des Eduktgemischs innerhalb des mindestens einen (vorzugsweise U-förmigen) Kontaktrohrs kann das Eduktgemisch nach dem Eintreten in das Kontaktrohr zunächst eine Inertschüttung durchströmen, wobei eventuell mitgerissener, in Form von Tröpfchen enthaltener flüssiger Schwefel an dieser Inertschüttung aus dem Eduktgemisch abgeschieden wird. Beispielsweise kann ein Anteil an flüssigem Schwefel in dem gasförmigen Wasserstoff und Schwefel enthaltenden Eduktgemisch von bis zu 100.000 Gew.ppm vorliegen. Für die Schwefeltropfenabscheidung ist bevorzugt ein Anteil der Inertschüttung, bezogen auf die Gesamtschüttung aus Inertschüttung und Katalysatorschüttung, von 1 bis 30 %, insbesondere von 2 bis 25 %, bevorzugt von 5 bis 20 %, besonders bevorzugt von 8 bis 16 % in dem mindestens einen U-förmigen Rohr vorgesehen. Die Inertschüttung kann aus Körpern beliebiger Gestalt, beispielsweise aus Satteln oder vorzugsweise aus Kugeln, bestehen, welche aus einem geeigneten Material, beispielsweise Zirkonoxid oder vorzugsweise Aluminiumoxid, sind.

Gemäß einer bevorzugten Variante der vorliegenden Erfindung ist das mindestens eine Kontaktrohr mit der Verteilerplatte der Verteilereinrichtung des erfindungsgemäßen Reaktors verbunden.

Um eine größere Stabilität der (vorzugsweise U-förmigen) Kontaktrohre zu erzielen, kann das mindestens eine Kontaktrohr nahe seinem unteren Ende, im Falle eines U-förmigen Rohrs nahe seinem unteren bogenförmigen Bereich, mit der Verteilereinrichtung verbunden werden, die durch ihre Dimensionierung den Schwingungsbereich des Kontaktrohrs bzw. des entsprechenden Rohrbündels in horizontaler Richtung begrenzt. Hierbei ist die Verteilereinrichtung ihrerseits nicht direkt mit dem Reaktormantel des Reaktors verbunden, sondern ist vielmehr indirekt über die Verbindung der Kontaktrohre z.B. mit dem Boden mit dem Reaktormantel verbunden. Dadurch können Probleme aufgrund von durch thermische Längenänderungen hervorgerufenen Spannungen zwischen Reaktor, Kontaktrohren und Verteilereinrichtung vermieden werden.

In einer Ausführungsform wird die Verteilerplatte mit den jeweiligen Schenkeln mindestens eines U-förmigen Rohrs nahe des unteren Endes des U-förmigen Rohrs verbunden, beispielsweise verschweißt, wobei sich ein Abschnitt des U-förmigen Rohrs, der zumindest einen Teil des bogenförmigen Bereichs umfasst, unterhalb der Verteilerplatte befindet. Da dieser Abschnitt des U-förmigen Rohrs nicht in Kontakt mit der Schwefelschmelze steht, sondern vielmehr in den Bereich der unter der Verteilereinrichtung aufgestauten Wasserstoffblase ragt, enthält das U-förmige Rohr in diesem Abschnitt vorzugsweise keine Katalysatorschüttung. Somit findet keine Umsetzung zu H₂S statt und es entsteht keine exotherme abzuführende Reaktionswärme. Innerhalb des mindestens einen U-förmigen Rohres können Unterteilungen vorgesehen sein, die den Bereich der Katalysatorschüttung von dem Bereich ohne Schüttung trennt, wobei die Unterteilungen jedoch für Edukte und Produkte der H₂S-Herstellung durchlässig sein müssen.

Bei der vorliegenden Erfindung sind vorzugsweise eine Zuführ- und die Verteilereinrichtung für gasförmigen Wasserstoff in einem unteren Abschnitt des Reaktors, z.B. nahe der unteren Haube, vorgesehen. Der mittels der Zuführeinrichtung in die Schwefelschmelze eingeleitete Wasserstoff steigt in Form von durch die Verteilereinrichtung verteilten Gasblasen durch die Schmelze, wodurch Schwefel aus der Schmelze gestrippt wird, und staut sich (z.B. unterhalb eines oberen Bodens des Reaktors) in dem Eduktbereich des Reaktors als Eduktgemisch auf, das über eine Phasengrenze mit der Schwefelschmelze in Kontakt steht. Das Eduktgemisch enthält gasförmigen Wasserstoff und Schwefel in einem Molverhältnis, welches sich durch die herrschenden Verfahrensparameter, d.h. Temperatur, Druck und die Menge an eingeleitetem Wasserstoff, dem Verdampfungsgleichgewicht des Schwefels entsprechend, einstellt. Hierbei kann durch die Wahl der Verfahrensparameter ein Überschuss an Wasserstoff oder Schwefel oder auch ein der Reaktionsstöchiometrie entsprechendes Molverhältnis eingestellt werden, je nach der gewünschten Reaktionsführung der Umsetzung zu H₂S. Bevorzugt wird bei der vorliegenden Erfindung ein Überschuss an Schwefel eingestellt, um einen möglichst vollständigen Umsatz von Wasserstoff mit Schwefel zu H₂S zu erzielen. Vorzugsweise beträgt dabei der Schwefelüberschuss pro Kilogramm erzeugtem H₂S zwischen 0,2 und 3,0, insbesondere zwischen 0,4 und 2,2, bevorzugt zwischen 0,6 und 1,6, besonders bevorzugt zwischen 0,9 und 1,2.

Bei dem erfindungsgemäßen Reaktor ist vorzugsweise eine einstufige Verteilung des gasförmigen Wasserstoffs über eine einzige Verteilereinrichtung vorgesehen.

Gegenstand der Erfindung ist auch ein Verfahren zur kontinuierlichen Herstellung von H₂S aus Wasserstoff und Schwefel, umfassend ein Einleiten von gasförmigem Wasserstoff über ein in dem Reaktor senkrecht angeordnetes offenes Rohr in eine Schwefelschmelze, die zumindest in einem unteren Teil des Reaktors enthalten ist. Das erfindungsgemäße Verfahren umfasst ein Verteilen des gasförmigen Wasserstoffs in der Schwefelschmelze über eine in der Schwefelschmelze angeordnete Verteilereinrichtung, die eine in dem Reaktor (vorzugsweise horizontal) angeordnete Verteilerplatte mit einem sich nach unten erstreckenden Rand zum Ausbilden einer Wasserstoffblase unter der Verteilerplatte (und ggf. mit Durchgangsöffnungen) zum Verteilen von Wasserstoff aus der Wasserstoffblase in der Schwefelschmelze über der Verteilerplatte umfasst.

Der in dem erfindungsgemäßen Verfahren eingeleitete Wasserstoff wird an der (vorzugsweise im unteren Abschnitt des Reaktors vorgesehenen) Verteilereinrichtung in die Schwefelschmelze dispergiert. Die Wasserstoffverteilung erfolgt über die im Reaktor möglichst horizontal angeordnete Verteilerplatte der Verteilereinrichtung über den Rand der Verteilereinrichtung und/oder durch in der Verteilerplatte vorgesehene Durchgangsöffnungen aus einer darunter aufgestauten Wasserstoffblase in die über der Verteilerplatte befindliche Schwefelschmelze.

Gemäß einer Variante des erfindungsgemäßen Verfahrens erfolgt das Verteilen von gasförmigem Wasserstoff aus der Wasserstoffblase unter der Verteilereinrichtung über den sich nach unten erstreckenden Rand der Verteilereinrichtung durch einen Spalt zwischen dem Rand und einem Reaktormantel des Reaktors in die Schwefelschmelze. Vorzugsweise erfolgt dieses Verteilen von gasförmigem Wasserstoff aus der Wasserstoffblase unter der Verteilereinrichtung über einen zackenförmigen Randbereich des sich nach unten erstreckenden Randes.

Alternativ oder zusätzlich zu der Verteilung über den Rand kann der Wasserstoff besonders bevorzugt auch durch in der Verteilerplatte der Verteilereinrichtung vorgesehene Durchgangsöffnungen in der über der Verteilerplatte vorhandenen Schwefelschmelze dispergiert werden. Kommt es zu einer Hemmung des Durchtritts des Wasserstoffs durch solche Durchgangsöffnungen, beispielsweise durch darin abgelagerten Schwefel, oder wird eine größere Menge an Wasserstoff zugeführt als durch die Durchgangsöffnungen abgeführt werden kann, so staut sich die Wasserstoffblase in dem durch die Verteilerplatte und den sich nach unten erstreckenden Rand der Verteilereinrichtung begrenzten Raum auf, gelangt Wasserstoff über den Randbereich des sich nach unten erstreckenden Randes in den diesen umgebenden Spalt und von dort aus in der Schwefelschmelze über der Verteilereinrichtung. Dabei gelangt der Wasserstoff aus der Wasserstoffblase unter der Verteilereinrichtung durch den Spalt zwischen Verteilereinrichtung und Reaktormantel in die über der Verteilereinrichtung vorhandene Schwefelschmelze. Auf diese Weise ist gewährleistet, dass der Wasserstoff in ausreichender Menge während der kontinuierlichen Herstellung von H₂S in der Schwefelschmelze verteilt wird.

Das erfindungsgemäße Verfahren zur Herstellung von H₂S wird bevorzugt bei Temperaturen des Eduktgemischs und des den Katalysator enthaltenden Reaktionsbereichs von 300 bis 450°C, bevorzugt von 320 bis 425°C, besonders bevorzugt von 330 bis 400°C durchgeführt, wodurch die Korrosionsbelastung der gewählten Materialien der konstruktiven Elemente gering gehalten wird. Vorzugsweise beträgt die Temperatur der Schwefelschmelze zwischen 300 und 450°C, insbesondere zwischen 320 und 425°C, bevorzugt zwischen 330 und 400°C, besonders bevorzugt zwischen 350 und 360°C. Die Temperatur im Eduktraum über dem Schwefelbad beträgt vorzugsweise zwischen 300 und 450°C, insbesondere zwischen 320 und 425°C, bevorzugt zwischen 330 und 400°C, besonders bevorzugt zwischen 350 und 360°C. Das in den Produktraum aus den (vorzugsweise U-förmigen) Kontaktrohren austretende Produktgemisch hat vorzugsweise eine Temperatur zwischen 300 und 450°C, insbesondere zwischen 320 und 425°C, bevorzugt zwischen 330 und 400°C, besonders bevorzugt zwischen 350 und 360°C. Die Drücke im Mantelraum des Reaktors und im Inneren der (vorzugsweise U-förmigen) Kontaktrohre betragen vorzugsweise 0,5 bis 10 bar, insbesondere 0,75 bis 5 bar, bevorzugt 1 bis 3 bar, besonders bevorzugt 1,1 bis 1,4 bar absolut.

Die Verdampfungsrate des Schwefels wird bei der vorliegenden Erfindung vorzugsweise so eingestellt, dass das Eduktgemisch einen Schwefelüberschuss enthält. Der überschüssige Schwefel wird dann mit dem Produkt aus dem Produktbereich des Reaktors abgeleitet und nachträglich als Schmelze abgeschieden. Dieser flüssige Schwefel kann z.B. über eine im oberen Teilbereich des Reaktors angeordnete Sammel- und Ableitkonstruktion, unter anderem umfassend einen Sammelboden und ein davon ausgehendes, in die Schwefelschmelze getauchtes Rücklaufrohr, in die in dem unteren Teilbereich des Reaktors enthaltene Schwefelschmelze zurückgeführt werden. Vorzugsweise erfolgt eine Kühlung der aus dem Reaktor austretenden H₂S-Gase in einem Wärmetauscher, wobei der überschüssige Schwefel auskondensiert und über die Sammel- und Ableitkonstruktion zurück in die Schwefelschmelze geleitet wird. Als Kühlmedium kann in einem Sekundärkreislauf warmes Druckwasser eingesetzt werden.

Die Erfindung wird im Folgenden anhand der Zeichnung näher erläutert. Hierbei zeigt:
- Figur 1: schematisch eine bevorzugte Ausführungsform eines erfindungsgemäßen Reaktors in Längsschnittdarstellung und
- Figur 2: eine Aufsicht auf eine Verteilereinrichtung, die in einer bevorzugten Ausführungsform eines erfindungsgemäßen Reaktors angeordnet ist.

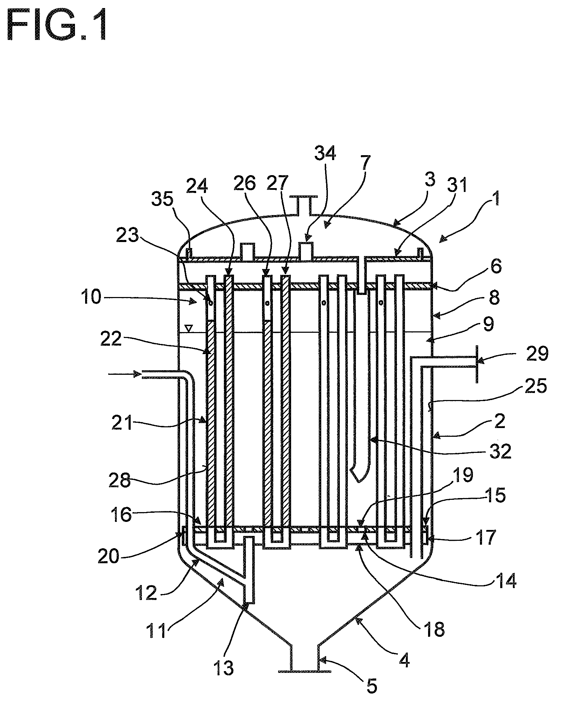

Figur 1 zeigt schematisch eine bevorzugte Ausführungsform eines erfindungsgemäßen Reaktors in Längsschnittdarstellung.

Der Reaktor 1 ist an beiden Seiten eines zylindrischen Körpers 2 mit Hauben 3, 4 geschlossen. An der oberen Haube 3 kann ein Produkt abgezogen werden. An der unteren Haube 4 befindet sich ein Ablassstutzen 5, um eventuell den Inhalt des Reaktors 1 vollständig abzulassen. In einem oberen Abschnitt des Reaktors 1 ist ein Boden 6 vorgesehen, der einen oberen Teilbereich mit einem Produktbereich 7 von einem unteren Teilbereich 8 abtrennt. Der Boden 6 ist mit einem Reaktormantel 25 des Reaktors 1 verbunden. Der untere Teilbereich 8 ist teilweise mit einer Schwefelschmelze 9 gefüllt, die über eine Phasengrenze mit einem Eduktbereich 10 in Kontakt steht, der nach oben durch den Boden 6 begrenzt wird. Der Eduktbereich 10 enthält hauptsächlich gasförmigen Wasserstoff und Schwefel.

Der Wasserstoff wird über eine Zuführeinrichtung 11 in einen unteren Abschnitt des Reaktors 1, beispielsweise in der unteren Haube 4, in die Schwefelschmelze 9 eingeleitet. Die Zuführeinrichtung 11 umfasst eine schräg verlaufende Leitung 12, die seitlich in ein im Reaktor 1 senkrecht angeordnetes, nach oben und unten offenes Rohr 13 mündet. Das obere Ende des Rohres 13 ragt in einen Raum 14 hinein, der durch eine Verteilereinrichtung 15 begrenzt wird.

Die Verteilereinrichtung 15 umfasst eine im Reaktor 1 horizontal angeordnete Verteilerplatte 16 und einen sich nach unten erstreckenden Rand 17, der einen vorzugsweise zackenförmig ausgebildeten Randbereich 18 aufweist. Der über die Zuführeinrichtung 11 eingeleitete Wasserstoff steigt in dem senkrechten Rohr 13 nach oben und staut sich unterhalb der Verteilerplatte 16 zu einer Wasserstoffblase auf. Durch Durchgangsöffnungen 19 in der Verteilerplatte 16 dispergiert der Wasserstoff in die darüber befindliche Schwefelschmelze 9 und steigt innerhalb der Schwefelschmelze 9 in Form von Gasblasen nach oben, wobei Schwefel aus der Schwefelschmelze 9 gestrippt wird. Dadurch bildet sich oberhalb der Schwefelschmelze 9 in dem Eduktbereich 10 ein Eduktgemisch, enthaltend gasförmigen Wasserstoff und Schwefel, aus.

Sind beispielsweise die Durchgangsöffnungen 19 in der Verteilerplatte 16 für den Wasserstoffdurchtritt versperrt, so kann der Wasserstoff auch aus der unterhalb der Verteilerplatte 16 aufgestauten Wasserstoffblase über den Randbereich 18 in einen Spalt 20 zwischen dem Reaktormantel 25 und dem Rand 17 der Verteilereinrichtung 15 in die Schwefelschmelze 9 dispergieren, wobei der Randbereich 18 vorzugsweise gezackt ausgebildet ist. Im zylindrischen Körper des Reaktors 1 sind Rohre 21 angeordnet, welche erfindungsgemäß U-förmig ausgebildet sind. Die U-förmigen Rohre 21 sind an ihren beiden Schenkeln 26,27 mit dem Boden 6 verbunden. Die Verbindung der Schenkel 26, 27 mit dem Boden 6 kann durch eine Schweißnaht hergestellt werden. Die U-förmigen Rohre 21 tauchen teilweise in die Schwefelschmelze 9 ein, wodurch die Möglichkeit eines direkten Wärmeaustausches zwischen dem Innenraum der Rohre 21 und der Schwefelschmelze 9 über die äußere Mantelfläche 28 der Rohre 21 gegeben ist. Innerhalb jedes U-förmigen Rohrs 21 ist ein Katalysatorfestbett 22 angeordnet, welches in beiden Schenkeln 26, 27 der U-förmigen Rohre 21 vorgesehen ist.

Wie in Figur 1 gezeigt, ist die Verteilereinrichtung 15 mit den U-förmigen Rohren 21 verbunden, wobei ein Teil und insbesondere der Übergang von einem Schenkel 26 zum zweiten Schenkel 27 der jeweiligen U-förmigen Rohre 21 unterhalb der Verteilerplatte 16 durch den Raum 14 verläuft. Da dieser Abschnitt der U-förmigen Rohre 21 in die aufgestaute Wasserstoffblase ragt und nicht in direktem Kontakt mit der Schwefelschmelze 9 steht, enthält dieser Abschnitt keinen Katalysator. Zwischen der Verteilereinrichtung 15 und dem Reaktormantel 25 ist der Spalt 20 positioniert. Die Verteilereinrichtung 15 ist nicht direkt mit dem Reaktormantel 25 verbunden.

In dem Reaktor 1 läuft die erfindungsgemäße Herstellung von Schwefelwasserstoff wie folgt ab. Durch die Zuführeinrichtung 11 wird gasförmiger Wasserstoff in die Schwefelschmelze 9 in den Reaktor 1 unterhalb der Verteilereinrichtung 15 eingeleitet, wodurch sich eine Wasserstoffblase unter der Verteilerplatte 16 ausbildet. Durch die Verteilereinrichtung 15 wird der Wasserstoff aus der Wasserstoffblase in der darüber befindliche Schwefelschmelze 9 verteilt und steigt innerhalb der Schwefelschmelze 9 in Form von Gasblasen nach oben, wobei Schwefel aus der Schwefelschmelze 9 gestrippt wird. Dadurch bildet sich oberhalb der Schwefelschmelze 9 in dem Eduktbereich 10 ein Eduktgemisch, enthaltend gasförmigen Wasserstoff und Schwefel, aus. Das Eduktgemisch tritt aus dem Eduktbereich 10 durch eine oder mehrere am Umfang eines Schenkels 26 jedes der U-förmigen Rohre 21 angeordnete Eintrittsöffnungen 23 in den Innenraum des einen Schenkels 26 des U-förmigen Rohres 21 ein, durchströmt die darin enthaltene Katalysatorschüttung 22, die durch eine vorgelagerte Inertschüttung ergänzt sein kann und wird entlang des Strömungsweges im Katalysatorfestbett 22 enthaltenden Reaktionsbereich weitgehend zu Schwefelwasserstoff umgesetzt. Das Produkt tritt an dem zweiten Schenkel 27 über mindestens eine Austrittsöffnung 24 in den Produktbereich 7 aus und kann gesammelt und von dort über Haube 3 ausgeleitet werden. Durch den direkten Kontakt der U-förmigen Rohre 21 mit der Schwefelschmelze 9 wird die bei der Umsetzung zu H₂S freiwerdende Reaktionswärme aus dem Katalysatorfestbett 22 in die Schwefelschmelze 9 über die äußere Mantelfläche 28 der U-förmigen Rohre entlang des Reaktionsbereichs abgegeben und für eine Schwefelverdampfung genutzt.

Um die Schwefelschmelze 9 während des Verfahrens in etwa in gleicher Höhe zu halten, werden gasförmiger Wasserstoff und flüssiger Schwefel in entsprechenden Mengen dem Reaktor 1 kontinuierlich über die Zuführeinrichtung 11 und eine Schwefeleinleitung 29 zugeführt. Überschüssiger Schwefel, welcher aus dem Produkt als Schmelze abgeschieden wird, gelangt zu einer im oberen Teilbereich des Reaktors 1 angeordneten Sammel- und Ableitkonstruktion. Diese Sammel- und Ableitkonstruktion umfasst einen Sammelboden 31, an dem zum Durchleiten des Produktes aus dem unterhalb des Sammelbodens 31 befindlichen Produktbereich 7 in den darüber befindlichen Produktbereich 7 Einlassstutzen 34 angeordnet sind und der von einem Rand 35 begrenzt ist. Der abgeschiedene flüssige Schwefel wird auf einem Sammelboden 31, welcher horizontal in dem Produktbereich 7 des Reaktors 1 angeordnet ist, gesammelt und über ein in die Schwefelschmelze 9 eingetauchtes Rücklaufrohr 32 in die in dem unteren Teilbereich des Reaktors 8 enthaltene Schwefelschmelze 9 rückgeführt. Der Reaktor 1 ist bevorzugt isoliert, so dass der Energieverbrauch möglichst gering ist.

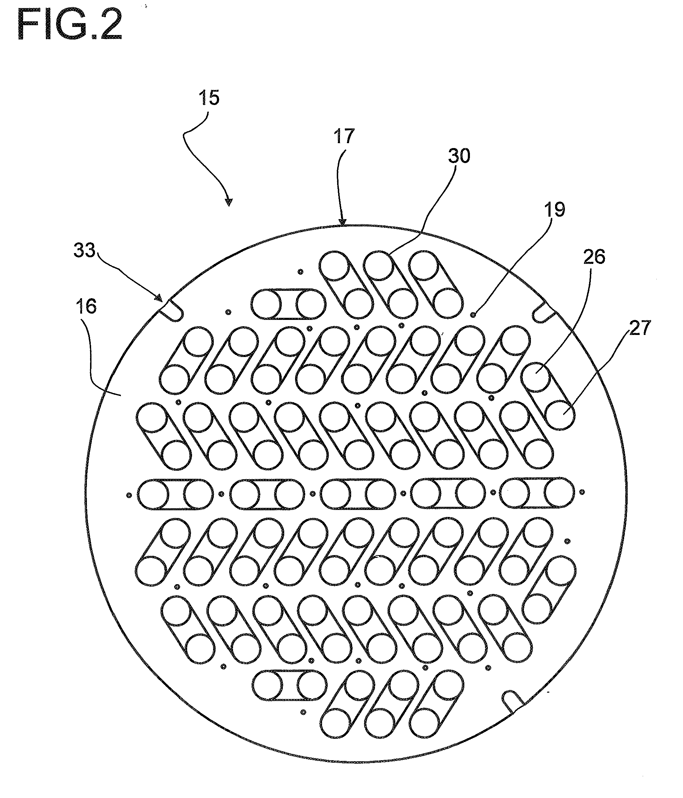

Fig. 2 zeigt eine Aufsicht auf Verteilereinrichtung, die in einer bevorzugten Ausführungsform eines erfindungsgemäßen Reaktors angeordnet ist.

Die Verteilereinrichtung 15 umfasst eine in dem Reaktor 1 horizontal anzuordnende Verteilerplatte 16 mit Durchgangsöffnungen 19 und einen sich nach unten erstreckenden Rand 17. Die ebene Verteilerplatte 16 erstreckt sich vorzugsweise nahezu über die gesamte Querschnittsfläche des Reaktors 1, wobei zwischen Reaktormantel und Rand 17 ein Spalt verbleibt. Die Form der Verteilerplatte 16 richtet sich nach der Geometrie des Reaktors, in welchem sie angeordnet wird. Sie ist in dem dargestellten Fall kreisförmig. Der unterhalb der Verteilereinrichtung 15 eingeleitete Wasserstoff staut sich unterhalb dieser Verteilerplatte 16 zu einer Wasserstoffblase in dem Raum auf, der durch den sich nach unten erstreckenden Rand 17 und der Verteilerplatte 16 begrenzt wird. Durch die Durchgangsöffnungen 19 in der Verteilerplatte 16 dispergiert der aufgestaute Wasserstoff gleichmäßig verteilt aus der Wasserstoffblase in die über der Verteilerplatte 16 befindliche Schwefelschmelze.

Verdeutlicht wird in Figur 2 eine mögliche Anordnung von Durchgangsöffnungen 19 in der Verteilerplatte 16, die kreisförmig ausgebildet und gleichmäßig über die Verteilerplatte 16 verteilt sind. Ebenfalls sind in der Verteilerplatte 16 Durchführungen 30 dargestellt, durch die in dem erfindungsgemäßen Reaktor die Schenkel 26, 27 der U-förmigen Rohre 21 hindurch treten und beispielsweise durch eine Schweißnaht mit der Verteilerplatte 16 verbunden werden. Am Umfang der Verteilerplatte 16 sind Aussparungen 33 vorgesehen, in denen die Einleitungen für Wasserstoff 12, für Schwefel 29 und das Schwefelrücklaufrohr 32 aufgenommen werden.

### Bezugszeichenliste

- 1: Reaktor
- 2: Reaktorkörper
- 3: Obere Haube
- 4: Untere Haube
- 5: Ablassstutzen
- 6: Boden
- 7: Produktbereich
- 8: Unterer Teilbereich des Reaktors
- 9: Schwefelschmelze
- 10: Eduktbereich
- 11: Zuführeinrichtung für Wasserstoff
- 12: Leitung
- 13: Senkrecht angeordnetes Rohr
- 14: Raum
- 15: Verteilereinrichtung
- 16: Verteilerplatte
- 17: Rand
- 18: Randbereich
- 19: Durchgangsöffnungen
- 20: Spalt
- 21: Rohre
- 22: Katalysatorfestbett
- 23: Eintrittsöffnung
- 24: Austrittsöffnung
- 25: Reaktormantel
- 26: Erster Schenkel
- 27: Zweiter Schenkel
- 28: Äußere Mantelfläche
- 29: Schwefeleinleitung
- 30: Durchführungen
- 31: Sammelboden
- 32: Rücklaufrohr
- 33: Aussparungen
- 34: Einlassstutzen
- 35: Rand

## Patentansprüche

1. Reaktor (1) zur kontinuierlichen Herstellung von H₂S aus Wasserstoff und Schwefel, umfassend eine Verteilereinrichtung (15) zum Verteilen von gasförmigem Wasserstoff in einer zumindest in einem unteren Teil des Reaktors enthaltenen Schwefelschmelze (9), **dadurch gekennzeichnet, dass** die Verteilereinrichtung (15) in der Schwefelschmelze (9) angeordnet ist und eine im Reaktor (1) angeordnete Verteilerplatte (16) mit einem sich nach unten erstreckenden Rand (17) mit einem Randbereich (18) aufweist, wobei der Wasserstoff aus einer sich unterhalb der Verteilerplatte (16) ausbildenden Wasserstoffblase über den Randbereich (18) in der Schwefelschmelze (9) verteilbar ist, wobei der Reaktor (1) weiterhin eine Zuführeinrichtung (11) für den gasförmigen Wasserstoff in den Reaktor (1) aufweist, umfassend ein in dem Reaktor (1) senkrecht angeordnetes offenes Rohr (13), durch das der gasförmige Wasserstoff in die Schwefelschmelze unterhalb der Verteilereinrichtung (15) einleitbar ist, um unterhalb der Verteilerplatte (16) eine Wasserstoffblase auszubilden.

2. Reaktor (1) nach Anspruch 1, **dadurch gekennzeichnet, dass** die Verteilerplatte (16) Durchgangsöffnungen (19) aufweist, durch die der Wasserstoff aus der Wasserstoffblase in der Schwefelschmelze (9) über der Verteilerplatte (16) verteilbar ist.

3. Reaktor (1) nach Anspruch 2, **gekennzeichnet durch** eine Gesamtöffnungsfläche der Durchgangsöffnungen (19) der Verteilerplatte (16), bezogen auf die Fläche der Verteilerplatte (16) von 0,001 bis 5 %.

4. Reaktor (1) nach einem der Ansprüche 2 oder 3, **gekennzeichnet durch** kreisförmige Durchgangsöffnungen (19) der Verteilerplatte (16) mit einem Durchmesser von 0,2 bis 3 cm oder **durch** schlitzförmige Durchgangsöffnungen der Verteilerplatte (16) mit einer Schlitzbreite von 0,2 bis 3 cm.

5. Reaktor (1) nach einem der Ansprüche 1 bis 4, **dadurch gekennzeichnet, dass** der sich nach unten erstreckende Rand (17) einen zackenförmigen Randbereich (18) aufweist, über den Wasserstoff aus der Wasserstoffblase durch einen Spalt (20) zwischen dem Rand (17) und einem Reaktormantel (25) des Reaktors (1) in die Schwefelschmelze einleitbar ist.

6. Reaktor (1) nach einem der Ansprüche 1 bis 5, **dadurch gekennzeichnet, dass** der Reaktor (1) mindestens ein Kontaktrohr (21) umfasst, in welchem die Umsetzung von gasförmigem Schwefel und Wasserstoff zu H₂S stattfindet, wobei das mindestens eine Kontaktrohr (21) teilweise in Kontakt mit der Schwefelschmelze (9) steht.

7. Reaktor (1) nach Anspruch 6, **dadurch gekennzeichnet, dass** das mindestens eine Kontaktrohr (21) mit der Verteilerplatte (16) der Verteilereinrichtung (15) verbunden ist.

8. Verfahren zur kontinuierlichen Herstellung von H₂S aus Wasserstoff und Schwefel, umfassend ein Einleiten von gasförmigem Wasserstoff in eine Schwefelschmelze, die zumindest in einem unteren Teil des Reaktors enthalten ist, **gekennzeichnet durch** ein Verteilen des gasförmigen Wasserstoffs in der Schwefelschmelze über eine in der Schwefelschmelze angeordnete Verteilereinrichtung (15), die eine in dem Reaktor (1) angeordnete Verteilerplatte (16) mit einem sich nach unten erstreckenden Rand (17) zum Ausbilden einer Wasserstoffblase unter der Verteilerplatte (16) umfasst, wobei der Wasserstoff aus der Wasserstoffblase **durch** die Verteilereinrichtung in der Schwefelschmelze (9) verteilt wird und wobei der Wasserstoff **durch** ein in dem Reaktor (1) senkrecht angeordnetes offenes Rohr (13) unterhalb der Verteilereinrichtung (15), das in die Wasserstoffblase hineinragt, eingeleitet wird.

9. Verfahren nach Anspruch 8, **gekennzeichnet durch** Verteilen von gasförmigem Wasserstoff aus der Wasserstoffblase unter der Verteilerplatte (16) über den sich nach unten erstreckenden Rand (17) der Verteilereinrichtung (15) **durch** einen Spalt (20) zwischen dem Rand (17) und einem Reaktormantel (25) des Reaktors (1) in der Schwefelschmelze (9).

10. Verfahren nach Anspruch 8 oder 9, **gekennzeichnet durch** Verteilen von gasförmigem Wasserstoff aus der Wasserstoffblase unter der Verteilerplatte (16) über einen zackenförmigen Randbereich (18) des sich nach unten erstreckenden Randes (17).

11. Verfahren nach einem der Ansprüche 8 bis 10, **gekennzeichnet durch** Verteilen von gasförmigem Wasserstoff aus der Wasserstoffblase unter der Verteilerplatte (16) durch in der Verteilerplatte (16) vorgesehene Durchgangsöffnungen (19) in der sich über der Verteilerplatte (16) befindlichen Schwefelschmelze (9).

## Claims

1. A reactor (1) for continuously preparing H₂S from hydrogen and sulfur, comprising a distributor device (15) for distributing gaseous hydrogen in a sulfur melt (9) present at least in a lower part of the reactor, wherein the distributor device (15) is arranged in the sulfur melt (9) and comprises a distributor plate (16) which is arranged in the reactor (1) and has an edge (17) extending downward with an edge region (18), the hydrogen being distributable in the sulfur melt (9) from a hydrogen bubble which forms below the distributor plate (16) via the edge region (18), the reactor (1) additionally having a feed device (11) for the gaseous hydrogen into the reactor (1), comprising an open tube (13) which is arranged vertically in the reactor (1) and through which the gaseous hydrogen can be passed into the sulfur melt below the distributor device (15), in order to form a hydrogen bubble below the distributor plate (16).

2. The reactor (1) according to claim 1, wherein the distributor plate (16) has passage orifices (19) through which the hydrogen is distributable from the hydrogen bubble in the sulfur melt (9) via the distributor plate (16).

3. The reactor (1) according to claim 2, **characterized by** a total orifice area of the passage orifices (19) of the distributor plate (16), based on the area of the distributor plate (16), of from 0.001 to 5%.

4. The reactor (1) according to either of claims 2 and 3, **characterized by** circular passage orifices (19) of the distributor plate (16) with a diameter of from 0.2 to 3 cm or by slot-shaped passage orifices of the distributor plate (16) with a slot width of from 0.2 to 3 cm.

5. The reactor (1) according to any of claims 1 to 4, wherein the edge (17) extending downward has a serrated edge region (18), via which hydrogen can be passed from the hydrogen bubble through a gap (20) between the edge (17) and a reactor jacket (25) of the reactor (1) into the sulfur melt.

6. The reactor (1) according to any of claims 1 to 5, wherein the reactor (1) comprises at least one contact tube (21) in which the conversion of gaseous sulfur and hydrogen to H₂S takes place, the at least one contact tube (21) being partly in contact with the sulfur melt (9).

7. The reactor (1) according to claim 6, wherein the at least one contact tube (21) is connected to the distributor plate (16) of the distributor device (15).

8. A process for continuously preparing H₂S from hydrogen and sulfur, comprising passage of gaseous hydrogen in a sulfur melt present at least in a lower part of the reactor, **characterized by** distribution of the gaseous hydrogen in the sulfur melt via a distributor device (15) which is arranged in the sulfur melt and comprises a distributor plate (16) arranged in the reactor (1) and has an edge (17) extending downward to form a hydrogen bubble below the distributor plate (16), the hydrogen from the hydrogen bubble being distributed in the sulfur melt (9) by the distributor device and the hydrogen being introduced through an open tube (13) which is arranged vertically in the reactor (1) below the distributor device (15) and projects into the hydrogen bubble.

9. The process according to claim 8, **characterized by** distribution of gaseous hydrogen from the hydrogen bubble below the distributor plate (16) via the edge (17) of the distributor device (15) which extends downward through a gap (20) between the edge (17) and a reactor jacket (25) of the reactor (1) in the sulfur melt (9).

10. The process according to claim 8 or 9, **characterized by** distribution of gaseous hydrogen from the hydrogen bubble below the distributor plate (16) via serrated edge region (18) of the edge (17) extending downward.

11. The process according to any of claims 8 to 10, **characterized by** distribution of gaseous hydrogen from the hydrogen bubble below the distributor plate (16) through passage orifices (19) provided in the distributor plate (16) in the sulfur melt (9) disposed above the distributor plate (16).

## Revendications

1. Réacteur (1) pour la préparation continue de H₂S à partir d'hydrogène et de soufre, comprenant un dispositif répartiteur (15) pour répartir de l'hydrogène gazeux dans une masse de soufre fondu (9) contenue au moins dans une partie inférieure du réacteur, **caractérisé en ce que** le dispositif répartiteur (15) est disposé dans la masse de soufre fondu (9) et comprend une plaque de répartition (16), disposée dans le réacteur (1), avec un bord (17) s'étendant vers le bas présentant une zone marginale (18), l'hydrogène provenant d'une bulle d'hydrogène qui se forme en-dessous de la plaque de répartition (16) pouvant être réparti, par la zone de bordure (18), dans la masse de soufre fondu (9), le réacteur (1) comprenant en outre un dispositif d'introduction (11) de l'hydrogène gazeux dans le réacteur (1), comprenant un tube ouvert (13), disposé verticalement dans le réacteur (1), tube par lequel l'hydrogène gazeux peut être introduit dans la masse de soufre fondu en-dessous du dispositif répartiteur (15), pour former en-dessous de la plaque de répartition (16) une bulle d'hydrogène.

2. Réacteur (1) selon la revendication 1, **caractérisé en ce que** la plaque de répartition (16) présente des ouvertures de passage (19), par lesquelles l'hydrogène provenant de la bulle d'hydrogène peut être réparti par la plaque de répartition (16) dans la masse de soufre fondu (9).

3. Réacteur (1) selon la revendication 2, **caractérisé par** une aire totale d'ouverture des ouvertures de passage (19) de la plaque de répartition (16), égale à 0,001 à 5 % de l'aire de la plaque de répartition (16).

4. Réacteur (1) selon l'une des revendications 2 ou 3, **caractérisé par** des ouvertures de passage (19) circulaires de la plaque de répartition (16), avec un diamètre de 0,2 à 3 cm, ou par des ouvertures de passage en forme de fentes de la plaque de répartition (16), avec une largeur de fente de 0,2 à 3 cm.

5. Réacteur (1) selon l'une des revendications 1 à 4, **caractérisé en ce que** le bord (17) s'étendant vers le bas présente une zone de bordure (18) dentelée, par laquelle l'hydrogène provenant de la bulle d'hydrogène peut, par un espace (20) entre le bord (17) et une enveloppe (25) du réacteur (1), être introduit dans la masse de soufre fondu.

6. Réacteur (1) selon l'une des revendications 1 à 5, **caractérisé en ce que** le réacteur (1) comprend au moins un tube de contact (21), dans lequel a lieu la réaction du soufre gazeux et de l'hydrogène pour donner du H₂S, le ou les tubes de contact (21) étant partiellement en contact avec la masse de soufre fondu (9).

7. Réacteur (1) selon la revendication 6, **caractérisé en ce que** le ou les tubes de contact (21) sont reliés à la plaque de répartition (16) du dispositif répartiteur (15).

8. Procédé de préparation continue de H₂S à partir d'hydrogène et de soufre, comprenant l'introduction d'hydrogène gazeux dans une masse de soufre fondu, qui est contenue au moins dans une partie inférieure du réacteur, **caractérisé par** une répartition de l'hydrogène gazeux dans la masse de soufre fondu par un dispositif répartiteur (15) disposé dans la masse de soufre fondu, dispositif répartiteur qui comprend une plaque de répartition (16), disposée dans le réacteur (1), avec un bord (17) s'étendant vers le bas pour former une bulle d'hydrogène en-dessous de la plaque de répartition (16), l'hydrogène provenant de la bulle d'hydrogène étant réparti par le dispositif répartiteur dans la masse de soufre fondu (9), et l'hydrogène étant introduit par un tube ouvert (13), disposé verticalement dans le réacteur (1), en-dessous du dispositif répartiteur (15), qui pénètre dans la bulle d'hydrogène.

9. Procédé selon la revendication 8, **caractérisé par** la répartition d'hydrogène gazeux provenant de la bulle d'hydrogène en-dessous de la plaque de répartition (16) par le bord (17), s'étendant vers le bas, du dispositif répartiteur (15), en passant par un espace (20) entre le bord (17) et une enveloppe (25) du réacteur (1) dans la masse de soufre fondu (9).

10. Procédé selon la revendication 8 ou 9, **caractérisé par** la répartition d'hydrogène gazeux provenant de la bulle d'hydrogène en-dessous de la plaque de répartition (16) par une zone de bordure dentelée (18) du bord (17) s'étendant vers le bas.

11. Procédé selon l'une des revendications 8 à 10, **caractérisé par** la répartition d'hydrogène gazeux provenant de la bulle d'hydrogène en-dessous de la plaque de répartition (16) par des ouvertures de passage (19), prévues dans la plaque de répartition (16), dans la masse de soufre fondu (9) se trouvant audessus de la plaque de répartition (16).
